# FASCICULE DE BREVET EUROPEEN

(11) **EP 4 382 769 B1**
(45) Date de publication et mention de la délivrance du brevet: **15.10.2025**
(21) Numéro de dépôt: 23214019.4
(22) Date de dépôt: 04.12.2023
(51) Int. Cl.: F16H 3/54, F16H 57/00, F16H 57/08

(54) **COURONNE POUR UN REDUCTEUR MECANIQUE D'AERONEF**
KRONE FÜR EIN MECHANISCHES REDUKTIONSGETRIEBE EINES FLUGZEUGS
RING GEAR FOR AN AIRCRAFT MECHANICAL GEAR

(30) Priorité: 09.12.2022 FR 2213078
(43) Date de publication de la demande: 12.06.2024
(73) Titulaire: Safran Transmission Systems, 92700 Colombes (FR)
(72) Inventeur: FRANCOIS, Loïc, 77550 Moissy-Cramayel (FR); LEJEUNE, Florent, 77550 Moissy-Cramayel (FR); MORELLI, Boris Pierre Marcel, 77550 Moissy-Cramayel (FR)
(74) Mandataire: Gevers & Orès

(56) Documents cités:
- EP-A2- 1 013 970
- WO-A1-2019/007915
- FR-A1- 3 072 749

## Description

### Domaine technique de l'invention

La présente invention concerne une couronne pour un réducteur mécanique d'aéronef, et en particulier pour une turbomachine d'aéronef ou pour un système d'entraînement d'une roue d'un train d'atterrissage d'aéronef.

### Arrière-plan technique

L'état de l'art comprend notamment les documents FR-A1-3 025 780, FR-B1-3 066 792, FR-B1-3 071 023, FR-3 072 749, FR-B1-3 098 562, FR-B1-3 101 129 et WO-A1-2019/007915.

Le rôle d'un réducteur mécanique est de modifier le rapport de vitesse et de couple entre l'axe d'entrée et l'axe de sortie d'un système mécanique.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un système d'entraînement d'une roue d'un train d'atterrissage peut en outre comprendre un réducteur mécanique, comme proposée par la Demanderesse dans le document EP-A1-3 882 136.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe de la turbomachine ou de la roue d'un train d'atterrissage. Les satellites ont chacun un axe de révolution différents équirépartis sur le même diamètre de fonctionnement autour de l'axe des planétaires. Ces axes sont parallèles à l'axe longitudinal X.

Il existe plusieurs architectures de réducteur. Dans l'état de l'art, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites.

Les réducteurs peuvent être composés d'un ou plusieurs étages d'engrènement. Cet engrènement est assuré de différentes façons comme par contact, par friction ou encore par champs magnétique. Il existe plusieurs types d'engrènement par contact comme avec des dentures droites, hélicoïdales ou en chevron.

Les réducteurs peuvent être composés d'un ou plusieurs étages d'engrènement. Cet engrènement est assuré de différentes façons comme par contact, par friction ou encore par champs magnétique.

Un satellite peut comprendre un ou deux étages d'engrènement. Dans la présente demande, on entend par « étage » ou « denture », une série de dents d'engrènement avec une série de dents complémentaires. Une denture peut être interne ou externe. Un satellite à simple étage comprend une denture qui peut être droite, hélicoïdale ou en chevron et dont les dents sont situées sur un même diamètre. Cette denture coopère à la fois avec le solaire et la couronne.

Un satellite à double étage comprend deux dentures ou deux séries de dents qui sont situées sur des diamètres différents. Une première denture coopère avec le solaire et une seconde denture coopère avec la couronne.

Il existe également une configuration, appelée Wolfrom, dans laquelle les satellites sont à double étage et comportent une première denture qui coopère avec le solaire et une couronne, et une seconde denture qui coopère avec une seconde couronne. Le réducteur comprend ainsi deux couronnes, dont une est fixe et l'autre mobile.

Afin d'ajouter de la souplesse dans un réducteur, une solution classique est de fixer la couronne fixe du réducteur par l'intermédiaire d'un porte-couronne ayant une forme en « soufflet », comme décrit par le brevet FR-B1-3 072 749. Cette solution est cependant difficile à intégrer dans un encombrement restreint.

D'autres solutions ont été apportées pour permettre à la couronne d'absorber les vibrations et consistent à intégrer dans la couronne des ressorts ou des patins en élastomère. Cependant, ces solutions ne permettent pas de supporter correctement les efforts d'engrènement sans provoquer une déformation non négligeable au niveau de la denture de la couronne. Par ailleurs, les faibles raideurs des patins ne permettent pas leur utilisation dans des applications mettant en jeu de fortes puissances.

Le document WO-A1-2019/007915 décrit une couronne dont la bride comprend des encoches radiales de passage d'huile. Ces encoches n'ont pas d'effet sur la souplesse de la couronne.

L'invention permet d'apporter une solution à au moins une partie de ces problèmes, de manière simple, efficace et économique.

### Résumé de l'invention

L'invention concerne une couronne pour un réducteur mécanique d'aéronef, cette couronne ayant une forme annulaire autour d'un axe et comportant :
- une denture interne à sa périphérie interne,
- une bride ou des cannelures annulaire(s) externe(s) à sa périphérie externe, et
- un voile annulaire s'étendant entre la denture interne et la bride ou les cannelures externe(s),
caractérisé en ce que le voile comprend une rangée annulaire de bras qui sont répartis autour dudit axe, ces bras reliant la denture interne à la bride ou les cannelures externe(s) et étant formés d'une seule pièce avec la denture interne et la bride ou les cannelures externe(s).

L'invention permet d'apporter de la souplesse dans la couronne et donc dans le réducteur, tout en conservant un encombrement restreint. Cela est rendu possible par l'intégration de cette souplesse dans le voile de la couronne, entre sa denture et sa bride ou ses cannelures. Cette souplesse est générée par les bras qui s'apparentent à des rayons d'une roue de bicyclette par exemple. Ces bras permettent de reprendre les efforts d'engrènement par un travail en traction ou en compression, tout en permettant une souplesse en direction radiale par un travail en flexion.

La solution proposée ci-dessous est compatible d'un réducteur simple étage ou à plusieurs étages. Elle est compatible d'un réducteur dit épicycloïdal, planétaire, différentiel ou de type Wolfrom. Elle est également compatible de dentures droites, hélicoïdales ou en chevron. Elle est compatible de tout type de porte-satellites, et en particulier d'un porte-satellites monobloc. Elle est en outre compatible de tout type de palier, qu'il soit composé d'éléments roulants, d'un palier hydrodynamique, etc. Elle est compatible d'une utilisation de la couronne et du réducteur dans une turbomachine à double flux, par exemple pour l'entraînement d'une soufflante ou d'une hélice. Elle est également compatible d'une utilisation de la couronne et du réducteur dans un système d'entrainement d'une roue d'un train d'atterrissage.

La couronne selon l'invention peut comprendre une ou plusieurs des caractéristiques suivantes, prises isolément les unes des autres, ou en combinaison les unes avec les autres :
- les bras sont séparés les uns des autres par des espaces, ou délimitent entre eux des espaces ;
- chacun ou au moins une partie desdits espaces a une forme générale parallélépipédique, trapézoïdale, triangulaire, ou en losange ;
- lesdits espaces sont formés par des orifices circulaires ou oblongs ;
- le voile comprend une première rangée annulaire d'orifices située sur une première circonférence, et une seconde rangée annulaire d'orifices située sur une seconde circonférence dont le diamètre est supérieur à celui de la première circonférence, les orifices de la première rangée étant situés circonférentiellement entre les orifices de la seconde rangée ;
- lesdits espaces sont vides, c'est-à-dire traversant axialement ;
- lesdits espaces sont remplis par des blocs réalisés dans un matériau différent du matériau principal de la couronne, et par exemple en polymère ;
- les bras sont inclinés de façon oblique vis-à-vis d'une direction radiale et présentent une orientation d'inclinaison dans une même direction circonférentielle ;
- les bras sont tous orientés de la même façon ;
- une première série des bras est orientée d'une première façon, et une seconde série des bras est orientée d'une seconde façon, différente de la première façon ;
- les bras de la première série sont entrecroisés avec les bras de la seconde série ;
- les bras sont tous inclinés par rapport à des rayons audit axe ;
- les bras sont tous situés dans un même plan perpendiculaire audit axe ;
- le nombre de bras est supérieur à 2, par exemple supérieur à 5 ou 10, de préférence supérieur à 20, et plus préférentiellement compris entre 20 et 100 ; ce nombre dépend par exemple du diamètre de la couronne.

La présente invention concerne également un réducteur mécanique pour un aéronef, ce réducteur comportant :
- un solaire mobile en rotation autour d'un axe,
- une couronne telle que décrite ci-dessus, montée autour du solaire et dudit axe, et
- des satellites montés entre le solaire et la couronne et engrenés avec le solaire et la couronne, ces satellites ayant des axes de rotation parallèle audit axe.

L'invention concerne en outre une turbomachine ou un système d'entrainement d'une roue de train d'atterrissage, en particulier d'aéronef, comportant au moins une couronne ou un réducteur mécanique tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig. 1] la figure 1 est une vue schématique en coupe axiale d'une turbomachine d'aéronef,
[Fig. 2] la figure 2 est une vue schématique partielle en coupe axiale d'un réducteur mécanique,
[Fig. 3] la figure 3 est une vue schématique de face d'une couronne selon un premier mode de réalisation de l'invention,
[Fig. 4] la figure 4 est une autre vue schématique en perspective de la couronne de la figure 3,
[Fig. 5] la figure 5 est une vue schématique partielle en perspective de la couronne de la figure 3,
[Fig. 6] la figure 6 est une vue similaire à celle de la figure 5 et illustre une variante de réalisation de l'invention,
[Fig. 7] la figure 7 est une vue similaire à celle de la figure 5 et illustre une autre variante de réalisation de l'invention,
[Fig. 8] la figure 8 est une vue similaire à celle de la figure 5 et illustre une autre variante de réalisation de l'invention,
[Fig. 9] la figure 9 est une vue similaire à celle de la figure 5 et illustre une autre variante de réalisation de l'invention,
[Fig. 10] la figure 10 est une vue schématique en perspective d'une roue d'un train d'atterrissage d'aéronef et d'un système d'entraînement de cette roue.

### Description détaillée de l'invention

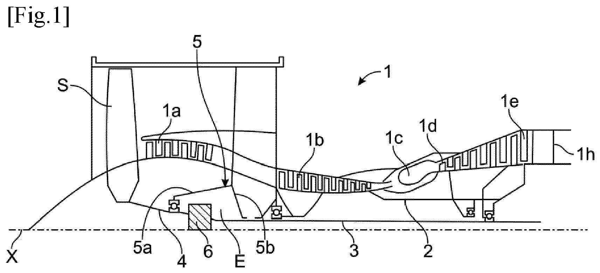

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé en rotation avec l'arbre BP 3 au moyen d'un réducteur 6. Ce réducteur 6 est généralement de type planétaire ou épicycloïdal.

Bien que la description qui suit concerne un réducteur du type planétaire ou épicycloïdal, elle s'applique également à un différentiel mécanique dans lequel les trois composants, que sont le porte-satellites, la couronne et le solaire, sont mobiles en rotation, la vitesse de rotation de l'un de ces composants dépendant notamment de la différence de vitesses des deux autres composants. Elle s'applique également au cas particulier d'un réducteur à double étage du type Wolfrom.

Le réducteur 6 est positionné dans la partie amont de la turbomachine. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

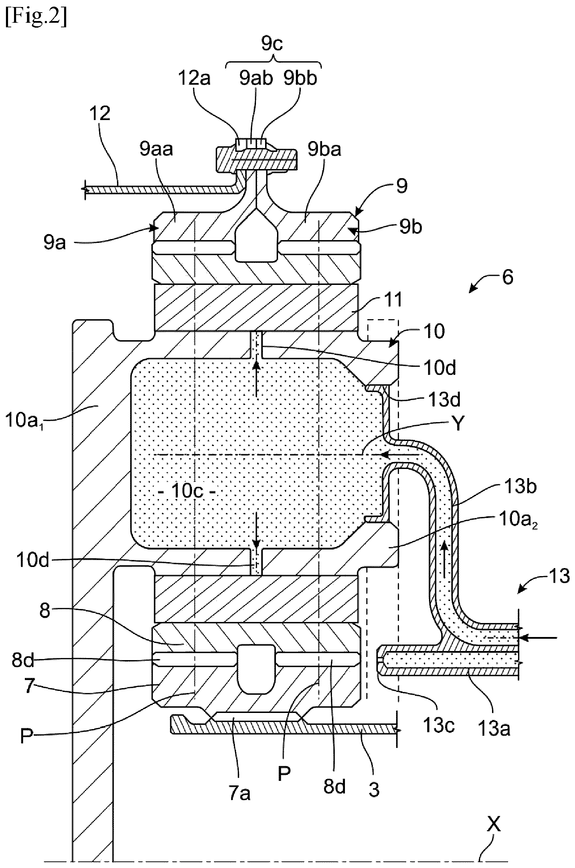

La figure 2 montre un réducteur 6 qui peut prendre la forme de différentes architectures selon si certaines pièces sont fixes ou en rotation. En entrée, le réducteur 6 est relié à l'arbre BP 3, par exemple par l'intermédiaire de cannelures internes 7a. Ainsi l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont répartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenus par un porte-satellites 10. Chaque satellite 8 tourne autour de son propre axe Y, et engrène avec la couronne 9.

En sortie nous avons :
▪ dans une configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.
▪ dans une configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.

Chaque satellite 8 est monté libre en rotation à l'aide d'un palier 11, par exemple de type roulement ou palier lisse hydrodynamique. Dans le cas d'un palier lisse, le palier 11 comprend un corps de palier 10b et les corps de palier 10b des différents paliers lisses sont positionnés les uns par rapport aux autres et sont portés par des parois 10a1, 10a2 du porte-satellites 10.

Les parois 10a1, 10a2 ont une forme annulaire et sont perpendiculaires à l'axe X. Elles sont à distance axiale l'une de l'autre et reçoivent entre elles les paliers 11, les satellites 8 et le solaire 7.

Il existe un nombre de paliers 11 égal au nombre de satellites 8. Pour des raisons de fonctionnement, de montage, de fabrication, de contrôle, de réparation ou de rechange, les paliers 11 (et en particulier les corps de palier 10b) et les parois 10a1, 10a2 peuvent être séparés en plusieurs pièces.

Pour les mêmes raisons citées précédemment, la denture 8d d'un réducteur peut être séparée en plusieurs hélices présentant chacun un plan médian P. Dans notre exemple, nous détaillons le fonctionnement d'un réducteur à plusieurs hélices avec une couronne séparée en deux demi-couronnes :
▪ une demi-couronne amont 9a constituée d'une jante 9aa et d'une demi-bride de fixation 9ab. Sur la jante 9aa se trouve l'hélice amont de la denture du réducteur. Cette hélice amont engrène avec celle du satellite 8 qui engrène avec celle du solaire 7.
▪ une demi-couronne aval 9b constituée d'une jante 9ba et d'une demi-bride de fixation 9bb. Sur la jante 9ba se trouve l'hélice aval de la denture du réducteur. Cette hélice aval engrène avec celle du satellite 8 qui engrène avec celle du solaire 7.

Si les largeurs d'hélice varient entre le solaire 7, les satellites 8 et la couronne 9 à cause des recouvrements de denture, elles sont toutes centrées sur un plan médian P pour les hélices amont et sur un autre plan médian P pour les hélices aval.

La demi-bride de fixation 9ab de la couronne amont 9a et la demi-bride de fixation 9bb de la couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

En variante, la bride 9c de la couronne 9 pourrait être remplacée par des cannelures.

Les flèches de la figure 2 décrivent l'acheminement de l'huile dans le réducteur 6. L'huile arrive dans le réducteur 6 depuis la partie stator 5 dans le distributeur 13 par différents moyens qui ne seront pas précisés dans cette vue car ils sont spécifiques à un ou plusieurs types d'architecture. Le distributeur est séparé en deux parties en général chacune répétée du même nombre de satellites. Les injecteurs 13a ont pour fonction de lubrifier les dentures et les bras 13b ont pour fonction de lubrifier les paliers 11. L'huile est amenée vers des injecteurs 13a pour ressortir par des extrémités 13c afin de lubrifier par de l'huile les dentures des satellites 8, du solaire 7 et aussi de la couronne 9. L'huile est également amenée vers le bras 13b et circule via la bouche d'alimentation 13d du corps de palier 10b dans une cavité interne 10c de ce dernier. L'huile circule ensuite dans cette cavité 10c pour alimenter des orifices 10d de passage d'huile jusqu'à une surface cylindrique externe de guidage du satellite correspondant.

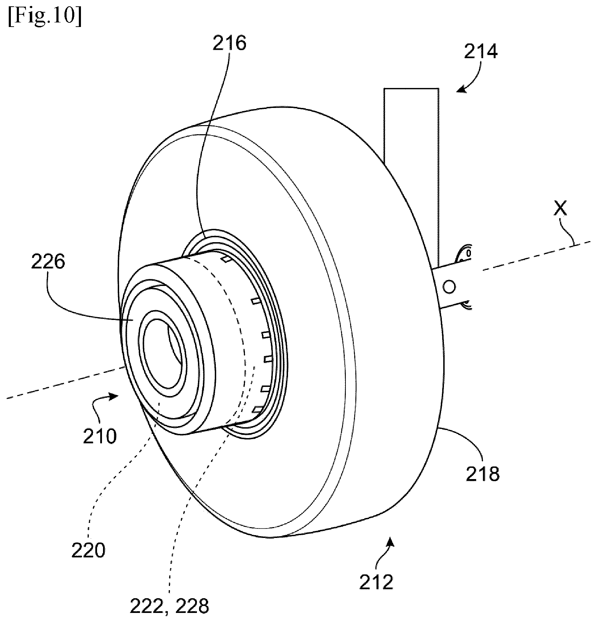

La présente invention concerne une couronne pour un réducteur mécanique 6 d'aéronef. Ce réducteur 6 peut être du type décrit dans ce qui précède ou d'un autre type, par exemple un réducteur à double étage du type Wolfrom. Par ailleurs, ce réducteur 6 peut être utilisé dans une turbomachine 1 telle que celle illustrée à la figure 1, pour l'entraînement d'une soufflante S, ou dans un autre contexte comme dans un système d'entraînement d'une roue pour un train d'atterrissage d'aéronef (cf. figure 10).

Il est à noter que la couronne selon l'invention peut être la seule couronne du réducteur 6, et peut être une couronne fixe ou mobile. En variante, le réducteur 6 pourrait comprendre deux couronnes selon l'invention. L'une de ces couronnes pourrait être fixe et l'autre pourrait être mobile. Les deux couronnes pourraient en outre être fixes ou mobiles. A titre d'exemple, chacune de ces deux couronnes pourrait être assimilable à une demi-couronne telle qu'illustré à la figure 2, les deux couronnes (ou demi-couronnes) étant alors fixées ensemble et à un porte-couronne par leurs brides ou cannelures.

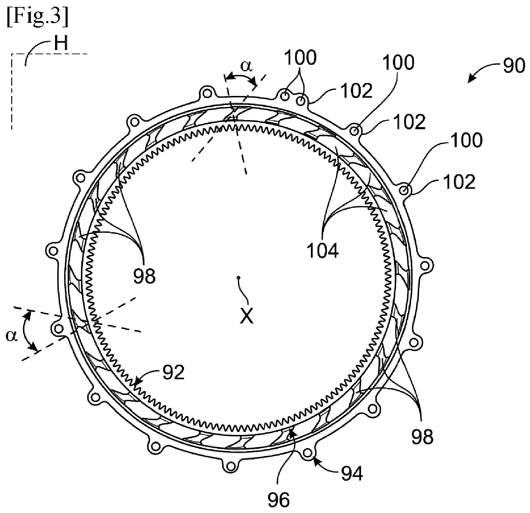

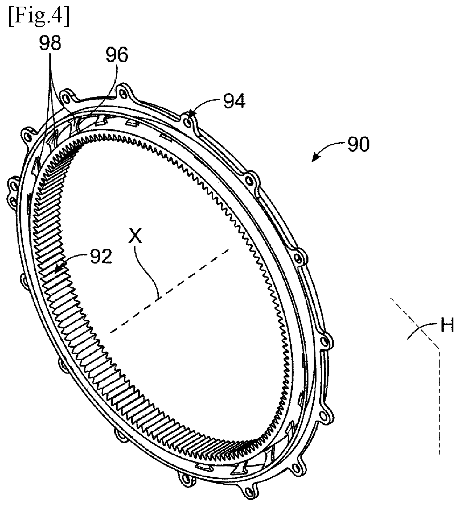

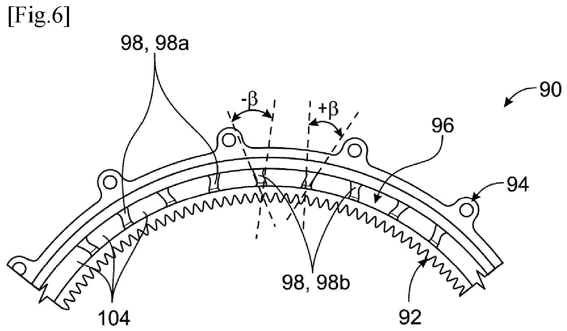

Les figures 3 à 5 illustrent un premier mode de réalisation d'une couronne 90 selon l'invention, et les figures 6 et suivantes illustrent des variantes de réalisation de cette couronne 90.

La couronne 90 est de préférence métallique. Son matériau principal est donc un alliage métallique.

La couronne 90 des figures 3 à 5 a une forme annulaire autour de l'axe X et comprend :
- une denture interne 92 à sa périphérie interne,
- une bride ou des cannelures annulaire(s) externe(s) 94 à sa périphérie externe, et
- un voile annulaire 96 s'étendant entre la denture interne 92 et la bride externe ou les cannelure(s) 94.

La particularité de cette couronne 90 est que son voile 96 comprend une rangée annulaire de bras 98 qui sont répartis autour de l'axe X, ces bras reliant la denture interne 92 à la bride ou les cannelures 94 et étant formés d'une seule pièce avec la denture interne 92 et la bride ou les cannelures 94. La denture 92 est droite dans l'exemple représenté mais pourrait en variante être hélicoïdale.

Dans l'exemple représenté, la bride 94 comprend une pluralité d'orifices axiaux 100 pour le passage d'éléments de fixation du type vis ou boulons. Ces orifices 100 sont formés dans des oreilles 102 radialement externes de la bride 94. Ces oreilles 102 sont réparties autour de l'axe X. En variante, les orifices 100 pourraient être formés dans une paroi annulaire continue de la bride 94.

La bride ou les cannelures 94 est/sont située(s) dans un plan H qui est perpendiculaire à l'axe X et qui passe par le milieu de la denture 92 dans l'exemple représenté.

Les bras 98 s'étendent de préférence dans ce plan H.

Dans le mode de réalisation des figures 3 à 5, on constate que les bras 98 sont régulièrement répartis autour de l'axe X et sont à distance les uns des autres. Ils ont tous la même orientation et sont inclinés dans le même sens par rapport à des rayons à l'axe X. L'angle α d'inclinaison de chaque bras est par exemple compris entre 20 et 70°.

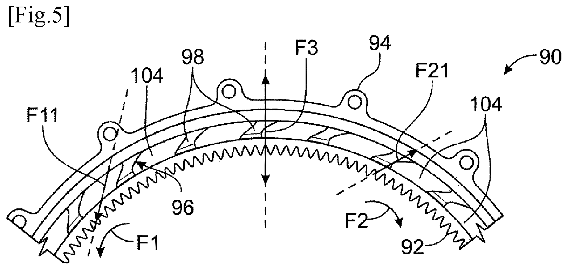

Dans le cas où les satellites engrenés avec la couronne 90 tourneraient dans le sens de la flèche F1, chacun des bras 98 subirait un travail en traction selon une direction qui serait alignée sur l'axe d'allongement de ce bras 98 (flèche F11 - figure 5). Dans le cas où les satellites engrenés avec la couronne 90 tourneraient dans le sens de la flèche F2, chacun des bras 98 subirait un travail en compression selon une direction qui serait alignée sur l'axe d'allongement de ce bras (flèche F21 - figure 5). Par ailleurs, le voile 96 et donc la couronne 90 présentent une souplesse en direction radiale selon la flèche F3.

Les bras 98 définissent entre eux des espaces 104 qui sont vides et ont ici une forme générale parallélépipédique.

Chacun des bras 98 comprend une première extrémité radialement externe de liaison à la bride ou les cannelures 94, et une seconde extrémité radialement interne de liaison à la denture 92. Ces extrémités peuvent être élargies par rapport au reste du bras et en particulier à la partie médiane du bras, comme cela est visible à la figure 5.

De manière générale, du fait des espaces 104 créés entre les bras 98, ces bras peuvent être surdimensionnés pour résister aux efforts en fonctionnement, sans impacter significativement la masse de la couronne 90. Ce surdimensionnement peut être fait par exemple dans une direction parallèle à l'axe X, les bras 98 ayant par exemple une largeur dans cette direction qui est supérieure à la largeur d'un voile de couronne de la technique antérieure.

Par ailleurs, les bras 98 peuvent avoir en section transversale une forme quelconque et par exemple carrée, rectangulaire, ronde, elliptique, etc. Cette forme en section peut en outre varier le long de l'axe d'allongement du bras 98.

La variante de réalisation de la figure 6 diffère du précédent mode de réalisation en ce qu'une série, et par exemple moitié, des bras 98, 98a est orientée d'une première façon, et une seconde série, et par exemple moitié, des bras 98, 98b est orientée d'une seconde façon, différente de la première façon.

Les bras 98, 98a sont par exemple inclinés d'un angle +β positif vis-à-vis de rayons à l'axe X, et Is bras 98, 98b sont par exemple inclinés d'un angle -β négatif vis-à-vis de rayons à l'axe X.

Les bras 98 définissent entre eux des espaces 104 qui sont vides et ont ici une forme générale trapézoïdale. Une première série des trapèzes ont leurs petites bases situées à l'extérieur de leurs grandes bases, et l'autre série des trapèzes, disposées entre les trapèzes de la première série, ont leurs petites bases situées à l'intérieur de leurs grandes bases.

Les extrémités des bras 98 sont également élargies.

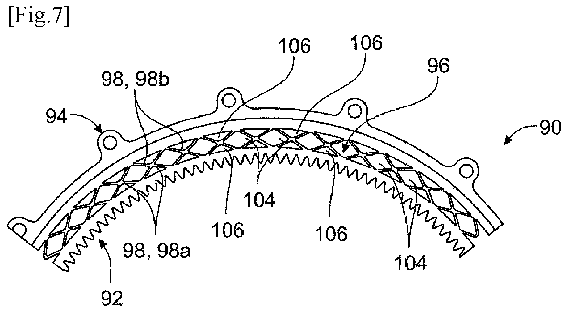

La variante de réalisation de la figure 7 diffère du précédent mode de réalisation en ce que les bras 98, 98a de la première série sont entrecroisés avec les bras 98, 98b de la seconde série.

Les bras 98 définissent entre eux des espaces 104, 106 qui sont vides et ont ici des formes générales triangulaires et en losange. Une paire de bras 98a, 98b entrecroisés délimitent ensemble deux espaces 106 triangulaires situés respectivement à l'intérieur et à l'extérieur des bras 98a, 98b. Deux paires de bras 98a, 98b adjacentes délimitent entre elles un espace 104 en losange.

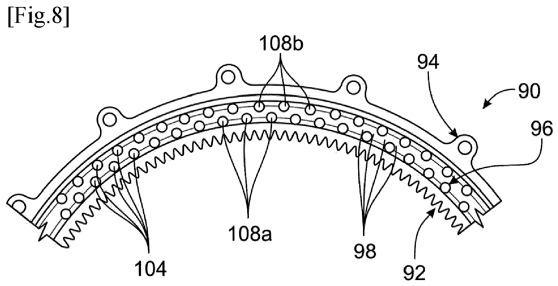

La variante de réalisation de la figure 8 diffère des précédents modes de réalisation en ce que les espaces 104 vides entre les bras 98 sont formés par des orifices 108a, 108b circulaires.

Le voile 96 comprend une première rangée annulaire d'orifices 108a située sur une première circonférence, et une seconde rangée annulaire d'orifices 108b située sur une seconde circonférence dont le diamètre est supérieur à celui de la première circonférence, les orifices 108a de la première rangée étant situés entre les orifices 108b de la seconde rangée.

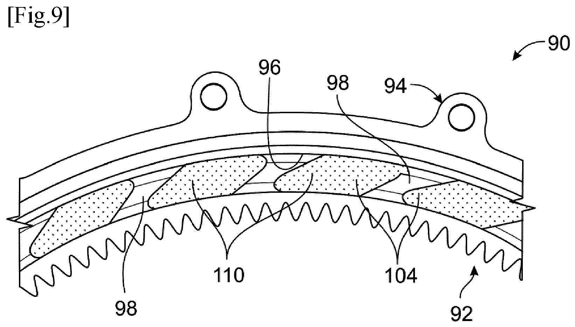

La variante de réalisation de la figure 9 diffère du premier mode de réalisation en ce que les espaces 104 sont comblés avec des blocs 110 qui sont réalisés dans un matériau différent du matériau principal de la couronne, et qui sont par exemple en polymère. Le polymère est par exemple choisi parmi : polyétheréthercétone, polyamide, polyimide, bismaléimide, époxy, phénoplastes (e.g., polystyrène), polyesters, polyuréthanes, caoutchoucs silicone, nylons, copolymères, mélange de polymères, etc.

Les blocs 110 peuvent être conçus pour reprendre une partie des efforts d'engrènement, et ainsi réduire la section des bras 98 dans un but de gain de masse.

Les espaces 104, 106 entre les bras 98 des autres variantes de réalisation de figures 6 à 8 pourraient également être remplis avec des blocs 110 similaires.

Le nombre de bras 98 de la couronne 90 est par exemple supérieur à 2, 5 ou 10, de préférence supérieur à 20, et plus préférentiellement compris entre 20 et 100. Ce nombre dépend notamment du niveau de chargement de la denture 92 de la couronne 90 en fonctionnement. Une couronne 90 faiblement chargée aura un nombre de bras 98 inférieur à une couronne plus fortement chargée en fonctionnement. De la même façon, l'inclinaison des bras 98 dépendra du chargement de la couronne 90 et de la souplesse souhaitée.

La figure 10 montre un système 210 d'entraînement d'au moins une roue 212 d'un train d'atterrissage 214 d'aéronef.

La roue 212 comporte une jante 216 qui a un axe de rotation X. De manière classique, cette jante 216 a une forme générale tubulaire ou de disque et porte à sa périphérie un pneu 218.

Le système 210 comprend un moteur électrique 220 et un système de transmission mécanique 222 entre un arbre du moteur 220 et la jante 216 de la roue 212.

Dans l'exemple représenté, le moteur 220 et le système 222 ont chacun une forme générale annulaire et sont centrés sur l'axe X. Ils sont disposés à côté l'un de l'autre et le système 222 est installé entre le moteur 220 et la jante 216. Une partie du système 222, voire également une partie du moteur 220, pourraient être logées dans la jante 16 pour réduire l'encombrement du système 210. Le moteur 220 et le système 222 peuvent être protégés par un capot cylindrique extérieur 226 en saillie sur un côté de la jante 216 ou du pneu 218.

Le système de transmission mécanique 222 comprend un réducteur mécanique 228 similaire au réducteur 6 décrit dans ce qui précède.

## Revendications

1. Couronne (90) pour un réducteur mécanique (6, 228) d'aéronef, cette couronne (90) ayant une forme annulaire autour d'un axe (X) et comportant :
- une denture interne (92) à sa périphérie interne,
- une bride ou des cannelures annulaire(s) externe(s) (94) à sa périphérie externe, et
- un voile annulaire (96) s'étendant entre la denture interne (92) et la bride ou cannelures externe(s) (94),
**caractérisé en ce que** le voile (96) comprend une rangée annulaire de bras (98) qui sont répartis autour dudit axe (X), ces bras (98) reliant la denture interne (92) à la bride ou cannelures externe(s) (94) et étant formés d'une seule pièce avec la denture interne (92) et la bride ou cannelures externe(s) (94).

2. Couronne (90) selon la revendication 1, dans laquelle les bras (98) sont séparés les uns des autres par des espaces (104, 106), ou délimitent entre eux des espaces (104, 106).

3. Couronne (90) selon la revendication 2, dans laquelle chacun ou au moins une partie desdits espaces (104, 106) a une forme générale parallélépipédique, trapézoïdale, triangulaire, ou en losange.

4. Couronne (90) selon la revendication 2, dans laquelle lesdits espaces sont formés par des orifices (108a, 108b) circulaires ou oblongs.

5. Couronne (90) selon la revendication 4, dans laquelle le voile (96) comprend une première rangée annulaire d'orifices (108a) située sur une première circonférence, et une seconde rangée annulaire d'orifices (108b) située sur une seconde circonférence dont le diamètre est supérieur à celui de la première circonférence, les orifices (108a) de la première rangée étant situés circonférentiellement entre les orifices (108b) de la seconde rangée.

6. Couronne (90) selon l'une des revendications 2 à 5, dans laquelle lesdits espaces (104, 106) sont vides.

7. Couronne (90) selon l'une des revendications 2 à 5, dans laquelle lesdits espaces (104) sont remplis par des blocs (110) réalisés dans un matériau différent du matériau principal de la couronne, et par exemple en polymère.

8. Couronne (90) selon l'une des revendications 1 à 7, dans laquelle les bras (98) sont inclinés de façon oblique vis-à-vis d'une direction radiale et présentent une orientation d'inclinaison dans une même direction circonférentielle.

9. Couronne (90) selon l'une des revendications 1 à 8, dans laquelle une première série des bras (98a) est orientée d'une première façon, et une seconde série des bras (98b) est orientée d'une seconde façon, différente de la première façon.

10. Couronne (90) selon la revendication 9, dans laquelle les bras (98a) de la première série sont entrecroisés avec les bras (98b) de la seconde série.

11. Couronne (90) selon l'une des revendications 1 à 10, dans laquelle les bras (98) sont tous situés dans un même plan (P) perpendiculaire audit axe (X).

12. Couronne (90) selon l'une des revendications 1 à 11, dans laquelle le nombre de bras (98) est supérieur à 2, par exemple supérieur à 5 ou 10, de préférence supérieur à 20, et plus préférentiellement compris entre 20 et 100.

13. Couronne (90) selon l'une des revendications 1 à 12, dans laquelle les bras (98) sont tous orientés de la même façon, et en particulier ils sont tous inclinés par rapport à des rayons audit axe.

14. Réducteur mécanique (6, 228) pour un aéronef, ce réducteur (6, 228) comportant :
- un solaire (7) mobile en rotation autour d'un axe,
- une couronne (90) selon l'une des revendications précédentes, montée autour du solaire (7) et dudit axe (X), et
- des satellites (8) montés entre le solaire (7) et la couronne (90) et engrenés avec le solaire et la couronne, ces satellites (8) ayant des axes de rotation (Y) parallèle audit axe (X).

15. Turbomachine (1), en particulier d'aéronef, comportant au moins une couronne (90) selon l'une des revendications 1 à 13 ou un réducteur mécanique (6, 228) selon la revendication 14.

16. Système (210) d'entrainement d'une roue (212) de train d'atterrissage (214), en particulier d'aéronef, comportant au moins une couronne (90) selon l'une des revendications 1 à 13 ou un réducteur mécanique (228) selon la revendication 14.

## Patentansprüche

1. Kranz (90) für ein mechanisches Untersetzungsgetriebe (6, 228) für ein Luftfahrzeug, wobei dieser Kranz (90) eine ringförmige Form um eine Achse (X) aufweist und umfasst:
- eine innere Verzahnung (92) an seinem inneren Umfang,
- einen Flansch oder eine oder mehrere äußere Ringnut(en) (94) an seinem äußeren Umfang, und
- einen ringförmigen Steg (96), der sich zwischen der inneren Verzahnung (92) und dem Flansch oder der/den äußeren Nut(en) (94) erstreckt,
**dadurch gekennzeichnet, dass** der Steg (96) eine ringförmige Reihe von Armen (98) umfasst, die um die Achse (X) verteilt sind, wobei diese Arme (98) die innere Verzahnung (92) mit dem Flansch oder der/den äußeren Nut(en) (94) verbinden und einstückig mit der inneren Verzahnung (92) und dem äußeren Flansch oder der/den äußeren Nut(en) (94) gebildet sind.

2. Kranz (90) nach Anspruch 1, wobei die Arme (98) durch Räume (104, 106) voneinander getrennt sind oder zwischen sich Räume (104, 106) begrenzen.

3. Kranz (90) nach Anspruch 2, wobei jeder oder mindestens ein Teil der Räume (104, 106) eine im Allgemeinen parallelepipedische, trapezförmige, dreieckige oder rautenförmige Form aufweist.

4. Kranz (90) nach Anspruch 2, wobei die Räume durch kreisförmige oder längliche Öffnungen (108a, 108b) gebildet sind.

5. Kranz (90) nach Anspruch 4, wobei der Steg (96) eine erste ringförmige Reihe von Öffnungen (108a), die an einem ersten Umfang angeordnet sind, und eine zweite ringförmige Reihe von Öffnungen (108b) umfasst, die an einem zweiten Umfang angeordnet sind, dessen Durchmesser größer ist als der des ersten Umfangs, wobei die Öffnungen (108a) der ersten Reihe in Umfangsrichtung zwischen den Öffnungen (108b) der zweiten Reihe angeordnet sind.

6. Kranz (90) nach einem der Ansprüche 2 bis 5, wobei die Räume (104, 106) hohl sind.

7. Kranz (90) nach einem der Ansprüche 2 bis 5, wobei die Räume (104) mit Blöcken (110) gefüllt sind, die aus einem anderen Material als dem Hauptmaterial des Kranzes bestehen, beispielsweise aus Polymer.

8. Kranz (90) nach einem der Ansprüche 1 bis 7, wobei die Arme (98) gegenüber einer radialen Richtung schräg geneigt sind und eine Neigungsausrichtung in einer gleichen Umfangsrichtung aufweisen.

9. Kranz (90) nach einem der Ansprüche 1 bis 8, wobei eine erste Reihe der Arme (98a) auf eine erste Weise ausgerichtet ist und eine zweite Reihe der Arme (98b) auf eine zweite Weise ausgerichtet ist, die sich von der ersten Weise unterscheidet.

10. Kranz (90) nach Anspruch 9, wobei die Arme (98a) der ersten Reihe mit den Armen (98b) der zweiten Reihe gekreuzt sind.

11. Kranz (90) nach einem der Ansprüche 1 bis 10, wobei die Arme (98) alle in einer gleichen Ebene (P) senkrecht zu der Achse (X) angeordnet sind.

12. Kranz (90) nach einem der Ansprüche 1 bis 11, wobei die Anzahl der Arme (98) größer als 2, beispielsweise größer als 5 oder 10, vorzugsweise größer als 20 und noch bevorzugter zwischen 20 und 100 beträgt.

13. Kranz (90) nach einem der Ansprüche 1 bis 12, wobei die Arme (98) alle auf die gleiche Weise ausgerichtet sind und insbesondere alle in Bezug auf die Strahlen zu der Achse geneigt sind.

14. Mechanisches Untersetzungsgetriebe (6, 228) für ein Luftfahrzeug, wobei das Untersetzungsgetriebe (6, 228) umfasst:
- ein um eine Achse drehbewegliches Sonnenrad (7),
- einen Kranz (90) nach einem der vorstehenden Ansprüche, der um das Sonnenrad (7) und die Achse (X) herum montiert ist, und
- Satelliten (8), die zwischen dem Sonnenrad (7) und dem Kranz (90) montiert und mit dem Sonnenrad und dem Kranz kämmen, wobei diese Satelliten (8) Drehachsen (Y) parallel zu der Achse (X) aufweisen.

15. Turbotriebwerk (1), insbesondere für ein Luftfahrzeug, umfassend mindestens einen Kranz (90) nach einem der Ansprüche 1 bis 13 oder ein mechanisches Untersetzungsgetriebe (6, 228) nach Anspruch 14.

16. System (210) zum Antreiben eines Rades (212) eines Fahrwerks (214), insbesondere eines Luftfahrzeugs, umfassend mindestens einen Kranz (90) nach einem der Ansprüche 1 bis 13 oder ein mechanisches Untersetzungsgetriebe (228) nach Anspruch 14.

## Claims

1. A ring gear (90) for an aircraft mechanical gearbox (6, 228), this ring gear (90) having an annular shape about an axis (X) and comprising:
- an internal toothing (92) at its internal periphery,
- an external annular flange or splines (94) at its external periphery, and
- an annular web (96) extending between the internal toothing (92) and the external flange or splines (94),
**characterised in that** the web (96) comprises an annular row of arms (98) which are distributed around said axis (X), these arms (98) connecting the internal toothing (92) to the external flange or splines (94) and being formed in a single piece with the internal toothing (92) and the external flange or splines (94).

2. The ring gear (90) as claimed in claim 1, wherein the arms (98) are separated from one another by spaces (104, 106), or delimit spaces (104, 106) between them.

3. The ring gear (90) as claimed in claim 2, wherein each or at least a portion of said spaces (104, 106) is generally parallelepipedal, trapezoidal, triangular or diamond-shaped.

4. The ring gear (90) as claimed in claim 2, wherein said spaces are formed by circular or oblong orifices (108a, 108b).

5. The ring gear (90) according to claim 4, wherein the web (96) comprises a first annular row of orifices (108a) located on a first circumference, and a second annular row of orifices (108b) located on a second circumference whose diameter is greater than that of the first circumference, the orifices (108a) of the first row being located circumferentially between the orifices (108b) of the second row.

6. The ring gear (90) according to one of claims 2 to 5, wherein said spaces (104, 106) are empty.

7. The ring gear (90) according to one of claims 2 to 5, wherein said spaces (104) are filled by blocks (110) made of a material different from the main material of the ring gear, for example polymer.

8. The ring gear (90) according to one of claims 1 to 7, wherein the arms (98) are inclined obliquely to a radial direction and have an inclination orientation in the same circumferential direction.

9. The ring gear (90) according to one of claims 1 to 8, wherein a first series of the arms (98a) is oriented in a first way, and a second series of the arms (98b) is oriented in a second way, different from the first way.

10. The ring gear (90) as claimed in claim 9, wherein the arms (98a) of the first series are intertwined with the arms (98b) of the second series.

11. The ring gear (90) according to one of claims 1 to 10, wherein the arms (98) are all located in the same plane (P) perpendicular to said axis (X).

12. The ring gear (90) according to one of claims 1 to 11, wherein the number of arms (98) is greater than 2, for example greater than 5 or 10, preferably greater than 20, and more preferably between 20 and 100.

13. The ring gear (90) according to any of claims 1 to 12, wherein the arms (98) are all oriented in the same way, and in particular they are all inclined with respect to radii of said axis.

14. A mechanical gearbox (6, 228) for an aircraft, the gearbox (6, 228) comprising:
- a sun gear (7) movable in rotation about an axis,
- a ring gear (90) according to one of the preceding claims, mounted around the sun gear (7) and said axis (X), and
- planet gears (8) mounted between the sun gear (7) and the ring gear (90) and meshed with the sun gear and the ring gear, these planet gears (8) having axes of rotation (Y) parallel to said axis (X).

15. A turbomachine (1), in particular for an aircraft, comprising at least one ring gear (90) according to one of claims 1 to 13 or a mechanical gearbox (6, 228) according to claim 14.

16. A drive system (210) for driving a wheel (212) of a landing gear (214), in particular of an aircraft, comprising at least one ring gear (90) according to one of claims 1 to 13 or a mechanical gearbox (228) according to claim 14.
